# EUROPÄISCHE PATENTSCHRIFT

(11) **EP 3 323 701 B1**
(45) Veröffentlichungstag und Bekanntmachung des Hinweises auf die Patenterteilung: **01.12.2021**
(21) Anmeldenummer: 17001631.5
(22) Anmeldetag: 05.10.2017
(51) Int. Cl.: B62M 6/50, B62M 11/14, G01L 3/04, B62M 6/55, B62M 6/60, G01L 3/14

(54) **EINRICHTUNG ZUR DREHMOMENTENERFASSUNG, INSBESONDERE ZUM STEUERN DES ZUSATZANTRIEBES EINES MIT MUSKELKRAFT ZU BEWEGENDEN FAHRZEUGES MIT HYBRIDANTRIEB**
DEVICE FOR DETECTING TORQUE, IN PARTICULAR FOR CONTROLLING THE ADDITIONAL DRIVE OF A VEHICLE WHICH CAN BE MOVED BY HUMAN STRENGTH
DISPOSITIF DE DÉTECTION DE COUPLE, EN PARTICULIER PERMETTANT DE COMMANDER L'ENTRAÎNEMENT SUPPLÉMENTAIRE D'UN VÉHICULE POURVU D'ENTRAÎNEMENT HYBRIDE PROPULSÉ PAR FORCE MUSCULAIRE

(30) Priorität: 14.11.2016 DE 202016008403 U
(43) Veröffentlichungstag der Anmeldung: 23.05.2018
(73) Patentinhaber: Oechsler AG, 91522 Ansbach (DE)
(72) Erfinder: Schmidt, Winfried, D - 91717 Wassertrüdingen (DE); Wolf, Martin, D - 91522 Ansbach (DE); Heinz, Jürgen, D - 91583 Schillingsfürst (DE); Gress, Florian, D - 91522 Ansbach (DE)
(74) Vertreter: Canzler & Bergmeier Patentanwälte Partnerschaft mbB

(56) Entgegenhaltungen:
- EP-A1- 3 012 181
- WO-A1-2014/161365
- CN-A- 102 620 875
- JP-A- 2000 337 981
- JP-A- 2002 331 985
- KR-A- 20020 000 578
- US-A- 3 034 368

## Beschreibung

Die Erfindung betrifft eine Einrichtung gemäß dem Oberbegriff des Hauptanspruches; wobei es sich hinsichtlich des Fahrzeuges um ein See- oder Landfahrzeug handelt, das hauptsächlich mit Muskelkraft fortbewegt wird aber auch über einen motorischen Zusatzantrieb grundsätzlich beliebiger Art zum Unterstützen dieser Fortbewegung verfügt. Dabei wirkt die Muskelkraft gewöhnlich über eine Pedal-Kurbelwelle etwa eines Tretbootes oder eines ein- oder mehrspurigen Fahrrades auf eine Abtriebswelle, die zusätzlich unter dem Einfluss des Zusatzantriebes steht. Aber auch bei geschobenen oder gezogenen Landfahrzeugen als den mit Muskelkraft fortbewegten Fahrzeugen lässt sich für die Steuerung eines insbesondere elektromotorischen Zusatzantriebes solche Einrichtung zum Erfassen des mit Muskelkraft eingebrachten Drehmomentes vorteilhaft einsetzen.

Die Unterstützung der Fortbewegung durch den Zusatzantrieb soll einsetzen, wenn die eingebrachte Muskelkraft ein vorgebbares Leistungsniveau erreicht hat; das damit fortan praktisch nicht überschritten zu werden braucht, weil dann bei gleichbleibendem Muskelbeitrag der zusätzliche Leistungsbedarf vom Zusatzantrieb in die Drehbewegung einer Abtriebswelle eingespeist wird.

Um solche Steuerung des Zusatzantriebes vom aktuellen Muskelbeitrag als dem Hauptantrieb abhängig zu machen, sind unterschiedliche Einrichtungen zum Erfassen desjenigen Drehmomentes im Einsatz, das von der Muskelkraft etwa unmittelbar an der Pedal-Kurbelwelle, oder auch an einem damit in Drehverbindung stehenden Getriebepartner, hervorgerufenen wird.

Nach der JP 2002 331985 A , der die Präambel des Anspruchs 1 offenbart, wird vorgeschlagen, beim Pedalieren einen Hebel um die Achse der drehfest mit einer Planeten-Sonne bestückten Pedal-Kurbelwelle zu verschwenken. Das führt zur Längsverlagerung eines mit einem Drucksensor ausgestatteten Bolzens, der danach samt Hebel von einer Zylinderfeder in eine Ruhestellung zurückgeschoben wird. Nach der JP 2000 337981 A wird wahlweise ein Planetenträger oder eine Getriebe-Ausganswelle mit einer Drehmomenten-Messeinrichtung bestückt. Nach der EP 3 012 181 A1 wird eine Planeten-Sonne auf einen elastischen Verformungskörper gespannt.

Eine Einrichtung anderer Art ist aus der DE 10 2013 214 395 A1, aber auch etwa schon aus der DE 29 31 230 C2 bekannt. Ein als Biegebalken ausgelegter, verschwenkbar gelagerter einarmiger Hebel stützt sich mit seinem freien Stirnende auf einem gehäusefesten Widerlager ab. Das um die Lagerstelle auftretende Drehmoment führt zu einem reversiblen Verformen des Biegebalkens. Diese Verformung kann mittels Dehnungsmeßstreifen messtechnisch erfasst werden. Allerdings folgt die Balkenbiegung unter dem Einfluss des zu erfassenden Drehmomentes nicht einem Kreisbogen. Deshalb variiert der Messwert in Abhängigkeit vom Ort der Anbringung des Dehnungsmeßstreifens längs des Biegebalkens. In der Fertigung sind das Optimieren des Messortes und ein Abgleichen mehrerer Meßstellen aufeinander fehleranfällig und mit einem erheblichen Zusatzaufwand verbunden.

Hinzu kommt, dass im stationären Zustand, bei Kräftegleichgewicht, das Reaktionsmoment des abgestützten Biegebalkens das Produkt aus der Stützkraft am Balken-Widerlager und der konstruktiv vorgegebenen Länge des Biegebalkens sein sollte. Die effektive Länge des Biegebalkens variiert aber mit der Balkenbiegung, was weitere Fehlereinflüsse zur Folge hat. Eine solche Instabilität stört besonders, wenn der schwankend da drehmomentenabhängig angesteuerte Zusatzantrieb dennoch stabil arbeiten soll.

Aus der WO 2014/161365 A1 ist ein Motor für ein Fahrrad mit Hilfsmotor bekannt. Der Motor enthält einen im Rad befindlichen Motorkörper, eine zentrale Welle, die auf dem im Rad befindlichen Motorkörper angeordnet ist, und einen in dem im Rad befindlichen Motorkörper montierten planetaren Drehmomentsensor. Der planetare Drehmomentsensor enthält: ein Sonnenrad, das auf der zentralen Welle montiert ist, einen Planetenradsatz, der mit dem Sonnenrad kämmt, und ein Hohlrad, das mit dem Planetenradsatz kämmt, wobei eines von dem Planetenradsatz und dem Hohlrad als ein Leistungseingangsteil und ein anderes Teil als ein Leistungsausgangsteil dient, wobei das Sonnenrad ferner mit einem Begrenzungsmechanismus zum Begrenzen der Drehung des Sonnenrads um einen bestimmten Winkel versehen ist und ferner einen Drehmomentsignalmechanismus aufweist, der mit dem Sonnenrad abgestimmt ist

Aus der KR 2002 0000578 A und CN 102 620 875 A sind vergleichbare Einrichtungen zur Drehmomenterfassung bekannt.

In Erkenntnis solcher Gegebenheiten liegt vorliegender Erfindung die technische Problemstellung zugrunde, eine Einrichtung gattungsgemäßer Art bei möglichst einfacher Konstruktion für zuverlässigere Drehmomentenerfassung auszulegen.

Diese Aufgabe ist durch das Zusammenwirken der im Patentanspruch 1 angegebenen Merkmale gelöst. Danach stützt sich beim Drehmomenten-Messwerk ein biegesteif dimensionierter, verschwenkbar gelagerter Hebelarm unter dem Einfluss eines Drehmomentes auf ein federelastisch abgestütztes Widerlager. Das wird dadurch gegen die Reaktionskraft einer gehäusefesten Rückstellfeder verlagert, nämlich verschwenkt oder insbesondere linear verschoben, bis Kräftegleichgewicht am Hebelarm erreicht ist. Der Weg, den das Widerlager bis dahin zurückgelegt hat, ist ein Maß für das auf den Hebelarm einwirkende Drehmoment.

Die Verlagerung des Widerlagers gegen die Kraft einer Rückstellfeder ist kleinbauend und zuverlässig durch gängige messtechnische Methoden bestimmbar; etwa induktiv durch Tauchkern-Abstandsmessung, durch Wirbelstrommessung oder durch kapazitive Abstandsmessung zwischen einerseits gehäusefesten und andererseits hebelfesten Elektroden.

Apparativ noch vorteilhafter ist es, die Einwirkung des Drehmomentes auf das Widerlager praktisch weglos zu erfassen. Dazu dient die Elastizität eines insbesondere metallischen Sensorstabes als unter dem Widerlager gehäusefest abgestützte "Rückstellfeder". Die Momentenmessung ist nun darauf reduziert, mittels Dehnungsmeßstreifen die momentane Zug- beziehungsweise Druckspannung im Sensorstab zu erfassen. Da im axial auf Druck oder auf Zug beanspruchten geraden prismatischen Stab mit seinem runden oder mehreckigen Querschnitt zwischen der gehäusefest abgestützten Grundfläche und dem gegenüberliegenden, vom Stirnende des Hebelarmes belasteten Widerlager in Form der Deckfläche überall gleiche innere Spannungsverhältnisse herrschen, ist nun - anders als beim Biegebalken - die axiale Lage der auf die Prismen-Mantelfläche aufgebrachten Dehnungsmeßstreifen unkritisch.

Das messtechnische Erfassen der Zug- oder Druck-Beanspruchung der vorzugsweise unter Vorspannung aufgebrachten Dehnungsmeßstreifen kann über eine Brückenschaltung erfolgen, die etwa einen Spannungs-Wert liefert, welcher der aktuellen linearen mechanischen Belastung des Sensorstabes proportional ist. Damit steht eine zuverlässige Größe für die betriebsabhängige Steuerung des Zusatzantriebes eines hybrid angetriebenen Fahrzeuges zur Verfügung, wie insbesondere eines Fahrrades oder dergleichen pedalbetriebenen Fahrzeuges mit Zusatzantrieb.

Ein, dort elektromotorischer, Fahrrad-Zusatzantrieb ist aus der DE-PS 10 2014 009 833 B4 bekannt. Ein Planetengetriebe steht unter dem Einfluss einerseits einer mit Muskelkraft als Hauptantrieb gedrehten Pedal-Kurbelwelle und andererseits der Triebwelle des Zusatzantriebes. Deren beiden Drehmomente werden einander durch beiderseitiges Beaufschlagen eines Hohlrades des Planetengetriebes überlagert. Dazu wird der im Hohlrad mit seinen Planetenrädern umlaufende Planetenträger von der Kurbelwelle angetrieben, und das Hohlrad selbst von der Triebwelle des Zusatzantriebes. Die zentral zwischen die Planetenräder eingreifende Sonne ist dort an einem Drehmomenten-Messwerk gehäusefest stillgesetzt. Mittels dessen Drehmomenten-Messwertes erfolgt eine Steuerung des vom Zusatzantrieb gelieferten Antriebsmomentes, also nach Maßgabe des vom mit Muskelkraft gelieferten Drehmomentes. Ein dünnwandiges Hohlrad weist dort einen axial abgestuften Durchmesser als Bestandteil eines umschaltbaren Getriebes auf, über welches eine dort von der Kurbelwelle getragene und mit einem Abtriebs- oder Transmissionsrad (Kettenblatt oder Riemenscheibe) bestückte Abtriebs-Hohlwelle angetrieben wird.

Jene vorbekannte getriebliche Lösung ist zwar funktionstüchtig; aber sehr raumaufwändig, weil der dort von der Kurbelwelle als Hauptantrieb gedrehte Planetenträger nur eine vergleichsweise geringe Drehzahlübersetzung ins Schnellere erbringt. Denn eine Übersetzung der von der Muskelkraft herrührenden Drehzahl und eine Untersetzung der vom Zusatzantrieb stammenden Drehzahl sollen für die getriebliche Drehmomentenüberlagerung auf die gleiche Größenordnung führen. Den wesentlichen Beitrag dazu liefern stirnverzahnte Räder, die dafür einen recht großen Durchmesser aufweisen müssen. Das bedingt einen großen Einbauraum im Umgehäuse. Funktional kommt erschwerend hinzu, dass dort eine Gangschaltung über das fertigungswie auch betriebstechnisch kritische da axial abgestufte dünnwandige Hohlrad des Planetengetriebes erfolgt.

In Erkenntnis der geschilderten Gegebenheiten liegt vorliegender Erfindung weiterhin die technische Problemstellung zugrunde, einen drehmomentengesteuerten Zusatzantrieb für kleinere Abmessungen seines Umgehäuses auszulegen; und dabei eine getriebetechnisch unproblematische Gangumschaltung zu eröffnen, die sich bedarfsweise auch problemlos über mehrere Gangstufen erstrecken lässt.

Diese weitergehende Aufgabe im Rahmen vorliegender Erfindung ist erfindungsgemäß durch das zusätzliche Zusammenwirken der im Patentanspruch 6 angegebenen wesentlichen Merkmale gelöst.

Hinsichtlich der Rädergeometrie zur Drehmomentenüberlagerung im Koppelrad der Planeten-Sonne resultiert daraus ein geometrisch weniger komplexer, kompakterer Aufbau; und der Kraftfluss von der Sonne samt Zusatzmoment zum Abtrieb eröffnet hier das Realisieren einer mehrstufigen Gangschaltung durch bloßen Wechsel zwischen axial gegeneinander versetzten, unterschiedlich bemessenen Stirnradpaarungen mit einerseits dem Koppelrad und mit andererseits in Abtriebsrichtung drehfest mit der Abtriebswelle verbundenen Triebrädern.

Das getriebliche Einkoppeln des vom Zusatzantrieb gelieferten Drehmomentes kann gleichermaßen über ein Stirnrad- oder über ein Riemengetriebe erfolgen. Vorteilhafter jedoch ist, schon wegen der konzentrischen Eingangs- und Ausgangswellen, ein kleinerbauendes Planetengetriebe - zumal, wenn die dort axial vorkragende Antriebswelle als Antriebsritzel unmittelbar mit der Sonne dieses weiteren Planetengetriebes bestückt wird. Dessen Hohlrad ist gehäusefest ausgelegt, der weitere Antrieb erfolgt getrieblich vom Planetenträger dieses zusätzlichen, beim Zusatzantrieb eingerichteten Planetengetriebes aus.

Zusätzliche Alternativen und deren Abwandlungen im Rahmen vorliegender Erfindung ergeben sich aus den weiteren Ansprüchen und, auch unter Berücksichtigung von deren Vorteilen, aus nachstehender Beschreibung von unter Beschränkung auf das Funktionswesentliche skizzierten bevorzugten Realisierungsbeispielen zur erfindungsgemäßen Lösung. In der Zeichnung zeigt:
- **Fig. 1**: im Axial-Längsschnitt, abgewickelt in die Zeichnungsebene, antriebs- und getriebetechnisch funktionswesentliche Komponenten eines erfindungsgemäß ausgelegten elektromotorischen Fahrrad-Zusatzantriebes,
- **Fig. 2**: in Prinzipdarstellung, als nicht beanspruchtes Beispiel, ein Drehmomenten-Messwerk mit einem federelastischen Sensorstab unter axialem Einfluss eines biegesteifen Hebelarmes zum Stillsetzen eines Umlaufräder-Getriebepartners, hier dessen Planetenträgers, und
- **Fig. 3**: ein gegenüber Fig.2 abgewandeltes Drehmomenten-Messwerk mit starrem Sensorstab nach der beanspruchten Lösung.

Ein stabiles Umgehäuse 11 übernimmt an einem Fahrzeugrahmen (nicht dargestellt) unter anderem die Position des Tretlagers 13 für die beidseitig aus dem Umgehäuse 11 hervorragende Kurbelwelle 14 mit Pedale (nicht dargestellt) zum Muskelantrieb eines hybrid angetriebenen Fahrzeuges 10, hier eines Fahrrades, mit elektromotorischem Zusatzantrieb 12. In vorliegender Erfindungsbeschreibung dient die eingebrachte Muskelkraft als Hauptantrieb für die Fortbewegung, die bedarfsweise durch den Zusatzantrieb 12 unterstützt werden kann.

Die Überlagerung des aus Muskelkraft gewonnenen mit dem auf der Ansteuerung des Zusatzantriebes 12 beruhenden Drehmoment erfolgt an einem Umlaufgetriebe, das vorzugsweise als Planetengetriebe 15 ausgelegt ist. Bei diesem steht wenigstens ein auf einem konzentrisch umlaufenden Träger 22 exzentrisch gelagertes Planetenrad 20 gleichzeitig mit der Außenperipherie eines Zentralrades (Sonnenrades 21) und mit der Innenperipherie eines Hohlrades 18 in Wirkverbindung, insbesondere in Verzahnungseingriff. Einer dieser drei konzentrischen Getriebepartner (Sonne 21 - Träger 22 - Hohlrad 18) wird von der Pedal-Kurbelwelle 14 her mit Muskelkraft angetrieben, und ein weiterer Getriebepartner von einer Triebwelle 35 des Antriebsmotors 31 her mit Motorkraft; während der dritte Getriebepartner zum Erzeugen eines Reaktionsmomentes für die Ausgabe des aus der Überlagerung resultierenden (Abtriebs-) Drehmomentes gebremst mitlaufen kann, vorzugsweise aber gehäusefest stillgesetzt ist. Dabei ist im Rahmen vorliegender Erfindung unter dem Partner nicht nur ein unmittelbarer Bestandteil des Getriebes selbst (etwa ein Zahnrad) zu verstehen, sondern auch eine Erstreckung auf damit drehfest gekoppelte oder bestückte, funktional vorangehende oder nachfolgende Konstruktionselemente wie Hebel, Wellen oder Räder.

Ein beispielsweise zur Kurbelwelle 14 achsparallel versetztes Planetengetriebe 15 mit Zentralwelle 40 ist für Übersetzen der aktuellen Drehzahl der Kurbelwelle 14 ausgelegt. Dafür ist die Kurbelwelle 14 drehfest mit einem Stirnrad 16 bestückt, das mit der Außenverzahnung 17 eines auch innen verzahnten Hohlrades 18 dagegen kleineren Durchmessers kämmt. In dessen Innenverzahnung 19 greifen Planetenräder 20 ein, die auf einem konzentrisch angeordneten Planetenträger 22 exzentrisch gelagert sind. Die stirnverzahnten Planetenräder 20 kämmen einerseits mit einer zentral zwischen sie eingreifenden Sonne 21 und andererseits mit der Innenverzahnung 19 des dazu konzentrischen Hohlrades 18.

Der Planetenträger 22 ist zwar auf der Zentralwelle 40 verdrehbar gelagert; aber er ist mittels einer, als angeformter oder angebrachter biegesteifer Hebelarm 46 ausgelegten, Stütze 41 am Umgehäuse 11 bei einem Drehmomenten-Messwerk 47 gegen Verdrehen arretiert. Dabei ist im Rahmen vorliegender Erfindung der Begriff des Hebelarmes 46 nicht auf die klassische Standard-Ausführung in Balkenform beschränkt; er erstreckt sich auf jedwede Abstützung 41 des fraglichen Getriebepartners gegen ein Widerlager 51, dessen Spannungszustand, Verformung oder Verlagerung zu messen ist. Der Hebelarm 46 kann deshalb etwa auch einfach als exzentrischer Vorsprung am festzusetzenden Getriebepartner selbst oder an einer drehstarr daran befindlichen Scheibe ausgebildet sein.

Aus der exzentrischen Abstützung gegen ein Widerlager 51 resultiert ein vom Messwerk 47 aufzunehmendes Gegenmoment beim Verdrehen der Sonne 21 mittels der Planetenräder 20, wenn diese vom Hauptantrieb in Form der Pedal-Kurbelwelle 14, in diesem Beispiel über das Stirnrad 16 und das Hohlrad 18, angetrieben werden. Grundsätzlich kann, bei entsprechender Momenteneinspeisung von den Haupt- und Zusatzantrieben her, auch ein anderer der Getriebepartner am Drehmomenten-Messwerk 47 stillgesetzt werden, im Planetengetriebe etwa sein Hohlrad.

In der Prinzipskizze zur Erläuterung der Getriebefunktionen kämmt ein kurbelwellenfestes Zahnrad 16 unmittelbar mit der Außenverzahnung 17 des Hohlrades 18. In der Praxis ist zwischen beiden jedoch noch ein Zahnrad (nicht dargestellt) zwischengeschaltet. Daraus resultiert im nachfolgenden Getriebezug eine Drehrichtungsumkehr, um schließlich das abtriebsseitige Transmissionsrad 28 in Vorwärts-Drehrichtung anzutreiben. Wenn dafür ein Doppelstirnrad zwischengeschaltet wird, erbringt es vorteilhafterweise einen Beitrag zur Übersetzung der Drehzahl der Kurbelwelle 14.

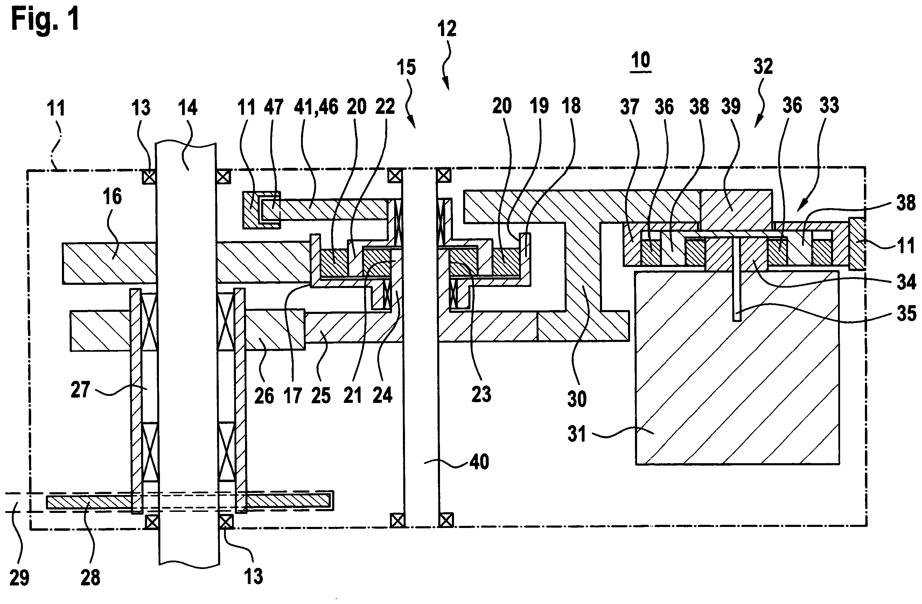

Als Sonne 21 im Planetengetriebe 15 fungiert beim in Fig.1. skizierten Realisierungsbeispiel die Außenverzahnung 23 einer Manschette 24, auf welcher das Hohlrad 19 drehbar gelagert ist. Dem gegenüber in axialer Richtung nach außerhalb des Planetengetriebes 15 versetzt ist die im Umgehäuse 11 drehbar gelagerte Zentralwelle 40 drehstarr mit dem hier als Koppelrad 25 bezeichneten Zahnrad bestückt. Dieses kann wie dargestellt einstückig mit der Manschette 24, also mit der Sonne 21 ausgebildet oder drehfest mit ihr verbunden sein. Für die Belange der Praxis jedoch sind Sonne 21 und Manschette 24 zwei einander axial überlappende Teile, um sie über einen Freilauf (nicht dargestellt) in gerichtete Drehverbindung zu setzen. Der Freilauf greift, wenn von der Sonne 21 in Richtung auf das Abtriebs- oder Transmissionsrad 28 ein Trieb-Drehmoment zu übertragen ist; aber er öffnet, wenn durch Rückwärts-Pedalieren an der Kurbelwelle 14 samt ihrem Stirnrad 16 die Drehrichtung umgekehrt wird, um dann mögliche Getriebeblockaden zuverlässig auszuschließen. Aus vergleichbaren Gründen kann es zweckmäßig sein, weitere Zahnräder des in Fig.1 skizzierten Getriebes auf ihren Wellen mittels Freiläufen nur in Betriebsrichtung Drehmomente übertragen zu lassen (nicht dargestellt).

Das Sonnen-Koppelrad 25, in dem die Haupt- und Zusatz-Drehmomente einander überlagert sind, kämmt mit einem Triebrad 26, mit dem eine Abtriebswelle 27, hier eine von der Kurbelwelle 14 drehbar getragene Hohlwelle, jedenfalls in Lastrichtung drehfest bestückt ist. Axial dagegen versetzt trägt die Abtriebswelle 27 drehfest ein Abtriebs- oder Transmissionsrad 28 zum Antrieb des Fahrzeuges 10 über eine Kette 29 (oder, bei angepasster Zahngeometrie, über einen Zahnriemen). So kann das Fahrzeug 10 durch Einbringen von Muskelkraft über die Pedale in deren Kurbelwelle 14 gefahren werden.

Das Koppelrad 25 kämmt außerdem mit einem Zwischenrad 30, über das ein Antriebsmotor 31 des Zusatzantriebes 12 sein Drehmoment in die Abtriebswelle 27 zum Transmissionsrad 28 einbringt. Zum Reduzieren der Drehzahl unter Steigern des Drehmomentes arbeitet der Antriebsmotor 31 auf ein Untersetzungsgetriebe 32, bei dem es sich um ein gewöhnliches Stirnradgetriebe oder um eine Transmission handeln kann; das aber bevorzugt als zweites Planetengetriebe 33 ausgelegt ist. Dessen Sonne 34 sitzt als Ritzel drehstarr auf der axial vorkragenden Motor-Triebwelle 35 und greift zwischen die hiesigen Planetenräder 36 ein. Die wälzen im drehstarren Hohlrad 37 ab und verdrehen deshalb ihren Planetenträger 38 mit seinem koaxial davor drehfest verbundenen Antriebsritzel 39. Dieses kämmt mit dem schon erwähnten Zwischenrad 30, um das resultierende Antriebsmoment zusätzlich in das Koppelrad 25 und dann über das Triebrad 26 in die Abtriebswelle 27 einzuspeisen.

Wie aus der Zeichnung ersichtlich, kann das Zwischenrad 30 als Zweifach-Zahnrad ausgelegt sein, um eine axiale Distanz zwischen dem Antriebsritzel 39, als Teil des zweiten Antriebs-Untersetzungsgetriebes 32, und dem Koppelrad 25 zu überbrücken. Zugleich kann dort über die Auslegung des miteinander kämmenden Verzahnungspaares eine zusätzliche Getriebestufe zum Untersetzen der Drehzahl des Zusatzantriebes 12 realisiert sein.

Die dargestellte getriebliche Übersetzung zwischen dem Koppelrad 25 und dem Triebrad 26 möge den ersten Gang einer Mehrgangschaltung repräsentieren. Dann kann auf andere Gänge (Übersetzungsverhältnisse) umgeschaltet werden, indem in diesem Bereich des Umgehäuses 11 unterschiedlich ausgelegte derartige Zahnrad-Paarungen 25-26 einander axial benachbart auf der Abtriebswelle 27 bereitgestellt werden (nicht dargestellt), die wahlweise wirksam schaltbar, also in Verzahnungseingriff zu versetzen sind. Die Abtriebswelle 27 ist mit den Triebrädern 26 über Freiläufe bestückt (nicht dargestellt), so dass vom aktuell lasttragenden Gang die niedrigeren Gänge überrollt werden, ohne Blockaden hervorzurufen.

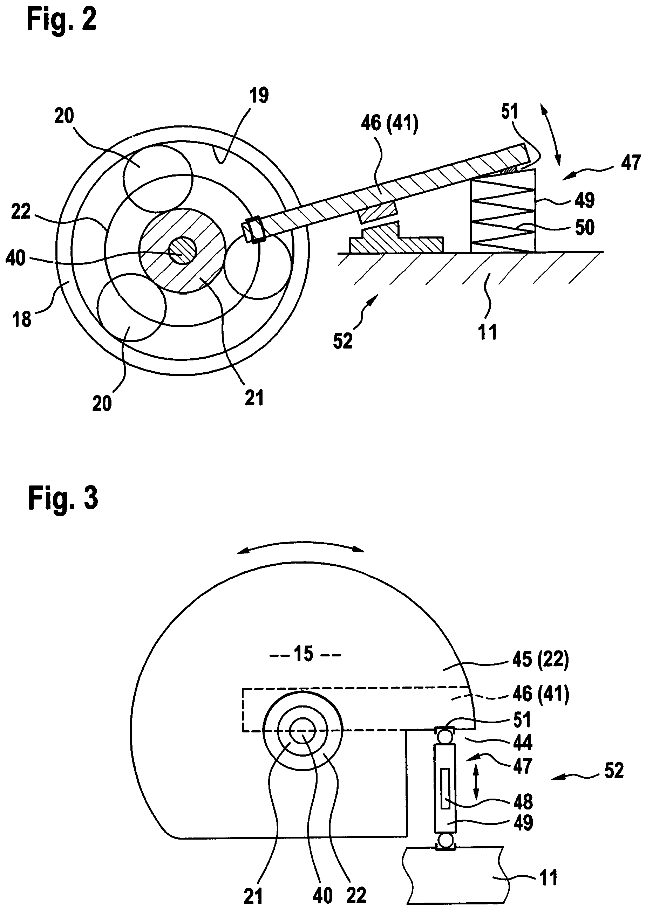

Je nach den Einbaugegebenheiten und den Platzverhältnissen beim Planetengetriebe 15 kann im skizzierten Ausführungsbeispiel der exzentrische biegesteife Hebelarm 46, zum Stillsetzen eines der Getriebepartner am Messwerk 47, unmittelbar am Planetenträger 22 angeformt oder befestigt sein; oder er ist mit einer koaxialen Verlängerung des Planetenträgers 22 axial vor dem Planetengetriebe 15 ausgebildet beziehungsweise angeordnet, wie in Fig.3 skizziert. Danach kann der drehfest am Planetenträger 22 vorgesehene Hebelarm 46 etwa als zentripetaler Stütz-Einschnitt 44 nach Art eines Viertelsektors in einer knickfest dimensionierten Dreh-Scheibe 45 ausgebildet oder zum biegesteif bemessenen, klassischen Hebelarm 46 abstrahiert sein.

Die am Messwerk 47 auftretende Stützkraft ist ein Maß für das vom stillgesetzten Getriebepartner, hier vom Planetenträger 22, aufgenommene Drehmoment; und somit auch für das mit Muskelkraft in das Planetengetriebe 15 eingebrachte Drehmoment des Hauptantriebes in Form der Kurbelwelle 14 für die Fortbewegung des hybrid antreibbaren Fahrzeuges 10. Bei Ansteigen des Stützkraft-Messwerts infolge Leistungssteigerung der Muskelkraft, etwa am Berg, bei auffrischendem Gegenwind oder für höhere Fahrgeschwindigkeit, übernimmt der dadurch mittels einer Motorsteuerung (nicht dargestellt) stärker ausgesteuerte Zusatzantrieb 12 einen höheren Leistungsbeitrag, und das Muskelmoment kann wieder zurückgenommen werden.

Bei der als Beispiel nicht beanspruchte Auslegung des Drehmomenten-Messwerkes 47 nach Fig.2 ist gewissermaßen ein weichelastischer Sensorstab 49 in Form einer Feder 50 grundsätzlich beliebiger Art mit dem biegesteif dimensionierten Hebelarm 46 verbunden. Die Auslenkung der Feder 50 aus ihrer Grundstellung heraus unter Krafteinleitung in das Widerlager 51 auf der Feder 50 erfolgt durch Verschwenken des Hebelarmes 46, bis sich Drehmomentengleichgewicht einstellt. Der dann erreichte Schwenkwinkel, also indirekt die aktuelle Federlänge, kann im Messwerk 47 ermittelt werden. Das kann mittels Elektroden für kapazitive Abstandsmessung zwischen dem Gehäuse 11 und dem Hebelarm 46 erfolgen, allgemein mittels einer Abstandsmessvorrichtung 52. Wenn die induktiv arbeitet, kann ein Tauchkern-Spulen-System vorgesehen sein, oder zur Wirbelstrommessung eine auf eine stationäre Leiterplatte gedruckte Spule in der Nachbarschaft etwa eines Kupferplättchens, das beispielsweise in einen Hebelarm 46 aus faserverstärktem Kunststoff integriert ist.

Kompakter baut die beanspruchte Auslegung des Messwerkes 47 nach Fig.3 mit Dehnungsmeßstreifen 48, die auf einen prismatischen Sensorstab 49 appliziert sind und etwa in Brückenschaltung ausgewertet werden. Mangels Biegebeanspruchung ist der Ort der Anbringung der DMS-Aufnehmer längs des Sensorstabes 49 unkritisch.

Der vom biegesteifen Hebelarm 46 über das Widerlager 51 unter Zug- oder Druckspannung gesetzte metallische Sensorstab 49 ist längsspannungsfest und knicksicher dimensioniert. Damit er nur in Längsrichtung (auf Druck oder auf Zug) beansprucht wird, ist der Sensorstab 49 wie skizziert bei seinen Grund- und Deckflächen vorzugsweise gelenkig an das Umgehäuse 11 beziehungsweise an das Widerlager 51 für den Hebelarm 46 angeschlossen. Ein für ein hauptsächlich mit Muskelkraft zu bewegendes Fahrzeug 10 wie ein Fahrrad ausgelegter Hybridantrieb mit vorzugsweise elektromotorischem Zusatzantrieb 12 weist also ein von der Kurbelwelle 14 beaufschlagtes und vom Zusatzantrieb 12 beaufschlagbares Getriebe auf, bei dem einer der Getriebepartner- bei einem Planetengetriebe 15 einer der drei konzentrisch verdrehbaren Getriebepartner (Hohlrad 18, Planetenträger 22 oder Sonne 21) - mittels eines biegesteifen Hebelarmes 46 an einem gehäusefesten Drehmomenten-Messwerk 47 arretiert ist. Das Messwerk 47 weist vorzugsweise einen Sensorstab 49 auf, der vom Hebelarm 46 in Längsrichtung beaufschlagt wird. Im Falle eines weichelastischen Sensorstabes 49 kann der durch eine Schraubenfeder 50 realisiert sein; dann wird die Winkelstellung des Hebelarmes 46 bei Momentengleichgewicht mittels eines etwa kapazitiv oder induktiv arbeitenden Abstandssensors 52 ermittelt. Im Falle eines steifelastischen, insbesondere metallischen, geraden prismatischen Sensorstabes 49 wird das Stützmoment über dessen innere Längsspannung mittels auf die Stab-Mantelfläche applizierter Dehnungsmeßstreifen 48 erfasst.

### Bezugszeichenliste

- 10: Fahrzeug
- 11: Umgehäuse
- 12: Zusatzantrieb (mit 31)
- 13: Tretlager (für 14 in 11)
- 14: Kurbelwelle (Hauptantrieb; durch 13/11 hindurch)
- 15: Planetengetriebe (für 14)
- 16: Stirnrad (an 14)
- 17: Außenverzahnung (an 18)
- 18: Hohlrad (von 15)
- 19: Innenverzahnung (von 18)
- 20: Planetenräder (in 18)
- 21: Sonne (zwischen 20-20-20)
- 22: Planetenträger (für 20)
- 23: Außenverzahnung (von 24/21)
- 24: Manschette (als 21 auf 40)
- 25: Koppelrad (an 24/40)
- 26: Triebrad (an 27)
- 27: Abtriebswelle
- 28: Transmissionsrad (an 27)
- 29: Kette (auf 28)
- 30: Zwischenrad (zwischen 15 und 31)
- 31: Antriebsmotor (von 12)
- 32: Untersetzungsgetriebe (hinter 31)
- 33: (Antriebs-)Planetengetriebe (als 32)
- 34: Sonne (von 33 zwischen 36-36-36)
- 35: Triebwelle (von 31, für 34)
- 36: Planetenräder (um 34 in 37)
- 37: Hohlrad (von 33)
- 38: Planetenträger (mit 36 in 37)
- 39: Antriebsritzel (an 38, nach 30)
- 40: Zentralwelle (von 15, mit 25, für 18, 22)
- 41: Stütze (für 22)
- 42: --
- 43: --
- 44: Einschnitt
- 45: Scheibe
- 46: Hebelarm (als 41)
- 47: Messwerk
- 48: Dehnungsmeßstreifen (DMS; auf 49)
- 49: Sensorstab (in 47)
- 50: Feder (als 49 zwischen 46 und 11)
- 51: Widerlager
- 52: Abstandsmessvorrichtung (zwischen 46 und 11)

## Patentansprüche

1. Einrichtung zur Drehmomentenerfassung an einem relativ zu einem Umgehäuse (11) rotierenden Getriebepartner, insbesondere zum Steuern des Zusatzantriebes (12) eines hybrid angetriebenen Fahrzeuges (10),
mit einem biegesteifen Hebelarm (46), der sich über einen linear längsbeanspruchten Sensorstab (49) gehäusefest abstützt,
dass die Rotation des Getriebepartners mittels einer gegen das Umgehäuse (11) abgefangenen Stütze (41) blockiert ist, die an dem Getriebepartner als der biegesteife Hebelarm (46) vorgesehen ist,
**dadurch gekennzeichnet,**
**dass** der Sensorstab (49) steifelastisch ausgebildet ist und
mit wenigstens einem Dehnungsmeßstreifen (48) zur Erfassung der momentanen Zug- oder Druckspannung im Sensorstab (49) bestückt ist.

2. Einrichtung nach dem vorangehenden Anspruch, **dadurch gekennzeichnet, dass** der Sensorstab (49) vom biegesteifen Hebelarm (46) über ein Widerlager (51) unter Zug- oder Druckspannung gesetzt werden kann und
dass der Sensorstab (49) metallisch ist sowie längsspannungsfest und knicksicher dimensioniert ist.

3. Einrichtung nach einem der vorangehenden Ansprüche, **dadurch gekennzeichnet, dass** der Sensorstab (49) bei seinen Grund- und Deckflächen gelenkig an das Umgehäuse (11) und an das Widerlager (51) für den Hebelarm (46) angeschlossen ist.

4. Einrichtung nach einem der vorangehenden Ansprüche, **dadurch gekennzeichnet, dass** mittels des biegesteifen Hebelarmes (46) der Planetenträger (20) eines Planetengetriebes (15) festgesetzt ist, bei dessen Sonne (21) die Drehmomente aus einer dessen Hohlrad (18) antreibenden Pedal-Kurbelwelle (14) als Hauptantrieb und aus dem motorischen Zusatzantrieb (12) einander überlagert sind.

5. Einrichtung nach dem vorangehenden Anspruch, **dadurch gekennzeichnet, dass** der drehfest arretierte Planetenträger (22) auf der Zentralwelle (40) des Planetengetriebes (15) drehbar gelagert ist.

6. Einrichtung nach dem vorangehenden Anspruch, **dadurch gekennzeichnet, dass** auf der Zentralwelle (40) eine Manschette (24) und auf dieser das Hohlrad (18) des Planetengetriebes (15) drehbar gelagert sind, wobei dessen Sonne (21) als Außenverzahnung über einem axialen Teil der Manschette (24) ausgebildet ist, die wenigstens in Abtriebsrichtung mit einem weiteren, mit einem Koppelrad (25) bestückten Teil der Manschette (24) drehfest verbunden ist.

7. Einrichtung nach dem vorangehenden Anspruch, **dadurch gekennzeichnet, dass** ein Umschalten vorgesehen ist zwischen unterschiedlichen Paarungen von miteinander kämmenden sonnenfesten Koppelrädern (25) und Triebrädern (26), mit denen eine Abtriebswelle (27) jedenfalls in Abtriebsrichtung drehfest bestückt ist.

8. Einrichtung nach einem der beiden vorangehenden Ansprüche, **dadurch gekennzeichnet, dass** zwischen den getrennten Teilen der Manschette (24) und dass zwischen der Abtriebswelle (27) und von Koppelrädern (25) angetriebenen Triebrädern (26) nur in Abtriebsrichtung lastübertragende Freiläufe eingebaut sind.

9. Einrichtung nach einem der vorangehenden Ansprüche, **dadurch gekennzeichnet, dass** beim Zusatzantrieb (12) die Sonne (34) eines weiteren, mit gehäusefestem Hohlrad (37) ausgelegten Planetengetriebes (33) vom Antriebsmotor (31) antreibbar ist, wobei dessen Planetenträger (38) mit einem Antriebsritzel (39) zu Überlagern des Zusatzdrehmomentes mit dem Hauptdrehmoment im Koppelrad (25) ausgestattet ist.

10. Eirichtung nach dem vorangehenden Anspruch, **dadurch gekennzeichnet, dass** zwischen dem Antriebsritzel (39) und dem Koppelrad (25) ein wenigstens in Antriebsrichtung lastübertragendes Zwischenrad (30) vorgesehen ist.

## Claims

1. A device for capturing torque on a gearing partner rotating relative to an enclosure (11), particularly for controlling the auxiliary drive (12) of a hybrid powered vehicle (10),
having a flexurally rigid lever arm (46) supported fixedly to the enclosure on a linearly longitudinally loaded sensor bar (49),
such that the rotation of the gearing partner is blocked by means of a rest (41) supported against the enclosure (11) and provided on the gearing partner as the flexurally rigid lever arm (46),
**characterized in that**
the sensor bar (49) is rigidly elastic in design, and
is equipped with at least one strain gage (48) for capturing the instantaneous tensile or compressive stress in the sensor bar (49).

2. The device according to the preceding claim, **characterized in that** the sensor bar (49) can be placed under tensile or compressive stress by the flexurally rigid lever arm (46) by means of a counter bearing (51), and
that the sensor bar (49) is metal and is sized for resisting longitudinal stress and buckling.

3. The device according to any one of the preceding claims, **characterized in that** the base and top surfaces of the sensor bar (49) are joined with a hinge to the enclosure (11) and to the counter bearing (51) for the lever arm (46).

4. The device according to any one of the preceding claims, **characterized in that** the planet carrier (20) of a planetary gearbox (15) is fixed by means of the flexurally rigid lever arm (46), the sun gear (21) thereof having superimposed torques from a pedal crankshaft (14) driving the internal gear (18) thereof as the main drive and from the motorized auxiliary drive (12).

5. The device according to the preceding claim, **characterized in that** the rotationally fixed and locked planet carrier (22) is rotatably supported on the central shaft (40) of the planetary gearbox (15).

6. The device according to the preceding claim, **characterized in that** a collar (24) is rotatably supported on the central shaft (40) and the internal gear (18) of the planetary gearbox (15) is rotatably supported thereon, wherein the sun gear (21) thereof is implemented as external teeth across an axial part of the collar (24) rotationally fixedly connected at least in the drive output direction to a further part of the collar (24) having a coupling gear (25).

7. The device according to the preceding claim, **characterized in that** switching is provided between different pairings of mutually meshing coupling gears (25) fixed to the sun gear and driving gears (26) rotationally fixed in the drive output direction to an output shaft (27) in each case.

8. The device according to any one of the two preceding claims, **characterized in that** freewheels transmitting loads only in the output direction are installed between the separate parts of the collar (24) and between the output shaft (27) and driving gears (26) driven by coupling gears (25).

9. The device according to any one of the preceding claims, **characterized in that** for the auxiliary drive (12), the sun gear (34) of a further planetary gearbox (33) designed having an internal gear (37) fixed to the enclosure can be driven by the drive motor (31), wherein the planet carrier (38) thereof is equipped with a driving pinion (39) for superimposing the auxiliary torque on the main torque in the coupling gear (25).

10. The device according to the preceding claim, **characterized in that** an intermediate gear (30) transmitting load at least in the driving direction is provided between the driving pinion (39) and the coupling gear (25).

## Revendications

1. Dispositif pour la détection du couple sur un partenaire de transmission tournant par rapport à un carter enveloppant (11), en particulier pour la commande de l'entraînement supplémentaire (12) d'un véhicule (10) à propulsion hybride,
avec un bras de levier (46) rigide en flexion qui est supporté à demeure sur le carter par une tige à capteur (49) soumise linéairement à une contrainte longitudinale,
la rotation du partenaire de transmission étant bloquée au moyen d'une béquille (41) venant en appui contre le carter enveloppant (11), qui est prévue sur le partenaire de transmission en tant que le bras de levier (46) rigide en flexion,
**caractérisé en ce que**
la tige à capteur (49) est de conception rigide-élastique, et
est pourvue d'au moins une jauge de contrainte (48) pour détecter la contrainte instantanée de traction ou de compression dans la tige à capteur (49).

2. Dispositif selon la revendication précédente, **caractérisé en ce que** la tige à capteur (49) peut être placée sous contrainte de traction ou de compression par le bras de levier (46) rigide en flexion par l'intermédiaire d'une culée (51), et
**en ce que** la tige à capteur (49) est métallique ainsi que dimensionnée de manière résistante à la contrainte longitudinale et résistante au flambage.

3. Dispositif selon l'une quelconque des revendications précédentes, **caractérisé en ce que** la tige à capteur (49) est reliée de manière articulée par ses surfaces de base et de recouvrement au carter enveloppant (11) et à la culée (51) pour le bras de levier (46).

4. Dispositif selon l'une quelconque des revendications précédentes, **caractérisé en ce que** le porte-satellites (20) d'un engrenage planétaire (15) est fixé au moyen du bras de levier (46) rigide en flexion, dans le soleil (21) duquel sont superposés les couples d'un vilebrequin (14) de pédale entraînant sa couronne (18) en tant qu'entraînement principal et de l'entraînement à moteur supplémentaire (12).

5. Dispositif selon la revendication précédente, **caractérisé en ce que** le porte-satellites (22) bloqué en rotation est monté de manière rotative sur l'arbre central (40) de l'engrenage planétaire (15).

6. Dispositif selon la revendication précédente, caractérisé en ce qu'une manchette (24) est montée de manière rotative sur l'arbre central (40) et la couronne (18) de l'engrenage planétaire (15) est montée de manière rotative sur ladite manchette, sachant que son soleil (21) est formé en tant que denture extérieure sur une partie axiale de la manchette (24), qui est reliée de manière résistante à la rotation, au moins dans la direction de sortie, à une autre partie de la manchette (24) pourvue d'une roue d'accouplement (25).

7. Dispositif selon la revendication précédente, caractérisé en ce qu'une commutation est prévue entre différents accouplements de roues d'accouplement (25) fixées en demeure au soleil, qui s'engrènent les unes dans les autres, et des roues d'entraînement (26) dont est équipé de manière fixe en rotation un arbre de sortie (27), en tout cas dans le sens de sortie.

8. Dispositif selon l'une quelconque des deux revendications précédentes, caractérisé en ce qu'entre les parties séparées de la manchette (24) et entre l'arbre de sortie (27) et des roues d'entraînement (26) entraînées par les roues d'accouplement (25), des pignons fous transmettant les charges sont installés uniquement dans la direction de sortie.

9. Dispositif selon l'une quelconque des revendications précédentes, **caractérisé en ce que** dans l'entraînement supplémentaire (12), le soleil (34) d'un engrenage planétaire (33) supplémentaire conçu avec une couronne (37) fixée à demeure sur le carter peut être entraîné par le moteur d'entraînement (31), sachant que son porte-satellites (38) est équipé d'un pignon d'entraînement (39) pour superposer le couple supplémentaire par le couple principal dans la roue d'accouplement (25).

10. Dispositif selon la revendication précédente, caractérisé en ce qu'une roue intermédiaire (30) transmettant la charge au moins dans la direction d'entraînement est prévue entre le pignon d'entraînement (39) et la roue d'accouplement (25).
